(19) Europäisches Patentamt
European Patent Office
Office européen des brevets

(11) **EP 1 833 113 B1**

(12) **EUROPÄISCHE PATENTSCHRIFT**

(45) Veröffentlichungstag und Bekanntmachung des Hinweises auf die Patenterteilung:
**31.03.2010 Patentblatt 2010/13**

(51) Int Cl.:
*H01M 8/02* (2006.01)          *H01M 8/10* (2006.01)
*H01M 8/00* (2006.01)

(21) Anmeldenummer: **07103567.9**

(22) Anmeldetag: **06.03.2007**

(54) **Elektroden-Membran Einheit und Brennstoffzelle**

Electrode-membrane assembly and fuel cell

Unité membrane-électrodes et pile à combustible

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **10.03.2006 DE 102006012907**

(43) Veröffentlichungstag der Anmeldung:
**12.09.2007 Patentblatt 2007/37**

(73) Patentinhaber: **Deutches Zentrum für Luft- und Ramfahrt e. V.**
**51147 Köln (DE)**

(72) Erfinder:
• **Kaz, Till**
**70186, Stuttgart (DE)**
• **Dr. Schirmer, Johannes**
**71549, Auenwald (DE)**

(74) Vertreter: **Hoeger, Stellrecht & Partner**
**Patentanwälte**
**Uhlandstrasse 14c**
**70182 Stuttgart (DE)**

(56) Entgegenhaltungen:
DE-A1- 19 646 487      DE-A1- 19 859 765
DE-C1- 19 803 132      JP-A- 10 040 936
US-A1- 2002 058 172    US-A1- 2004 197 626

• PU C ET AL: "A METHANOL IMPERMEABLE PROTON CONDUCTING COMPOSITE ELECTROLYTE SYSTEM" JOURNAL OF THE ELECTROCHEMICAL SOCIETY, ELECTROCHEMICAL SOCIETY. MANCHESTER, NEW HAMPSHIRE, US, Bd. 142, Nr. 7, 7. Juli 1995 (1995-07-07), Seiten L119-L120, XP002900348 ISSN: 0013-4651

**Beschreibung**

Die Erfindung betrifft eine Elektroden-Membran-Einheit, welche mit flüssigem Brennstoff-Lösungsmittel-Gemisch betrieben ist, umfassend eine Kathode, eine Anode und eine protonenleitende Membraneinrichtung, welche zwischen der Anode und der Kathode angeordnet ist, wobei die Membraneinrichtung mehrlagig aufgebaut ist mit einer ersten Membranlage, welche an die Kathode grenzt, einer zweiten Membranlage, welche an die Anode grenzt, und einer einzigen protonenleitenden Zwischenlage, welche zwischen der ersten Membranlage und der zweiten Membranlage angeordnet ist und jeweils an diese grenzt und an welcher Brennstoff abreagierbar ist und/oder welche als Sperrschicht für den Wasserfluss wirkt, und wobei die Membraneinrichtung durchlässig für Oxidator zur protonenleitenden Zwischenlage ausgebildet ist.

Die Erfindung betrifft ferner eine Brennstoffzelle.

Es sind Direkt-Methanol-Brennstoffzellen (DMFC) oder Direkt-Ethanol-Brennstoffzellen (DEFC) bekannt, welchen anodenseitig ein flüssiges Brennstoff-Lösungsmittel-Gemisch zugeführt wird. Im Falle der DMFC ist der Brennstoff Methanol und im Falle der DEFC ist der Brennstoff Ethanol. Das Lösungsmittel ist üblicherweise Wasser. Direkt-Methanol-Brennstoffzellen und Direkt-Ethanol-Brennstoffzellen bieten den Vorteil, dass sie mit einem flüssigen Brennstoff betrieben werden können, der drucklos und mit vergleichsweise geringem technischen Aufwand gelagert und bereitgestellt werden kann. Dadurch sind solche Systeme insbesondere für einen mobilen Einsatz beispielsweise in Kraftfahrzeugen sehr attraktiv.

Aus der DE 196 46 487 C2 ist eine Elektroden-Elektrolyt-Einheit für eine Brennstoffzelle bekannt, welche aus einem protonenleitfähigen Elektolyt besteht, und auf einer Seite mit einer katalytisch aktiven Anode und auf der gegenüberliegenden Seite mit einer katalytisch aktiven Kathode versehen ist, und die mit einem Brennstoff arbeitet, von dem an der Anode Protonen abgespalten werden. Der Elektrolyt ist in zwei Elektrolytschichten aufgeteilt, zwischen denen eine ein- oder mehrlagige Sperrschicht aus einem porenfreien oder geschlossenporigen, auf der einen Seite Protonen aufnehmenden und auf der gegenüberliegenden Seite Protonen abgebenden, für alle sonstigen Stoffe undurchlässigen Material angeordnet ist.

Aus der DE 199 17 812 C2 ist eine Membranelektrodeneinheit für eine Brennstoffzelle bekannt, welche eine Polymermembran mit einer Anode auf der einen Seite und einer Kathode auf der anderen Seite umfasst, wobei Anode und Kathode Katalysatorschichten zwecks Durchführung des Brennstoffzellenprozesses mit Rekombination der Reaktionsgase aufweisen. Es ist zumindest eine innerhalb der Membran lokalisierte Katalysatorschicht vorgesehen, an der die Rekombination stattfindet, zur Gewinnung von Wasser aus der Rekombination der Reaktionsgase zwecks Befeuchtung der Membran.

Aus der EP 1 263 066 A2 ist eine asymmetrische zusammengesetzte Membran zur Verwendung in einer Brennstoffzellenmembran-Elektroden-Einheit bekannt, welche ein poröses Polymersubstrat, eine Imprägnierung mit einem Kationenaustauschmaterial und eine dichte Oberflächenschicht umfasst. Die Imprägnierung füllt partiell das Substrat so aus, dass das Substrat einen ersten Bereich mit Poren aufweist, welche im Wesentlichen durch die Imprägnierung gefüllt sind, und einen zweiten porösen Bereich aufweist. Die dichte Schicht ist benachbart zu dem ersten Bereich des Substrats. Das Substrat hat eine Restporosität von größer als 10 % und die zusammengesetzte Membran ist im Wesentlichen gasundurchlässig und hat eine im Wesentlichen poröse größere Oberfläche.

Aus der US 2002/0058172 A1 ist eine Membran-Elektroden-Anordnung für eine selbstbefeuchtende Brennstoffzelle bekannt.

Aus der DE 198 59 765 A1 ist eine Elektroden-Elektrolyt-Einheit für eine Brennstoffzelle bekannt, bei der zwischen Anode und Kathode mindestens eine protonenleitfähige Elektrolytschicht angeordnet ist. Ferner ist mindestens eine den Durchtritt von atomarem oder molekularem Wasserstoff erlaubende, den Durchtritt anderer aus dem Brennstoff oder dem Brennstoffgemisch und/oder dem Reaktionsstoff oder dem Reaktionsstoffgemisch stammender Stoffe hindernde Sperrschicht vorgesehen. Die Sperrschicht besteht aus einem elektrisch leitenden Kohlenstoff.

Aus der DE 198 03 132 C1 ist eine Brennstoffzelle mit einem protonenleitfähigen Elektrolyten, einer Anode und einer Kathode bekannt. Diese weist einen wasserstoffdurchlässigen Sperrschichtverbund auf, der zwei Außenschichten und eine zwischen diesen angeordnete Kernschicht umfasst.

Aus der JP 10 040 936 ist ein polymerer Elektrolytfilm bekannt, welcher eine Kationenaustauschmembran auf der Seite einer Kathode und eine Kationenaustauschmembran auf der Seite einer Anode umfasst. Eine oxidierende katalytische Schicht ist zwischen den Kationenaustauschmembranen angeordnet.

Aus dem Artikel PU C ET AL: "A METHANOL IMPERMEABLE PROTON CONDUCTING COMPOSITE ELECTROLYTE SYSTEM" JOURNAL OF THE ELECTROCHEMICAL SOCIETY, MANCHESTER, NEW HAMPSHIRE, US; Bd. 142, Nr. 7, 7. Juli 1995 (1995-07-07), Seiten L 119-L120, XP002900348 ist ein Elektrolytsystem bekannt, welches für Methanol undurchlässig ist.

Aus der US 2004/0197626 A1 ist eine Struktur bekannt, welche einen Metallfilm umfasst, ein polymeres Elektrolytmaterial, und mindestens eine hydrophile Schicht, welche zwischen dem Metallfilm und dem polymeren Elektrolytmaterial angeordnet ist.

Der Erfindung liegt die Aufgabe zugrunde, eine Elektroden-Membran-Einheit der eingangs genannten Art bereitzustellen, welche auf einfache Weise herstellbar ist und durch welche ein hoher Wirkungsgrad für eine Brennstoffzelle bereitstellbar ist.

Diese Aufgabe wird bei der eingangs genannten Elektroden-Membran-Einheit erfindungsgemäß dadurch gelöst, dass die erste Membranlage eine kleinere Dicke aufweist als die zweite Membranlage und dass die Membraneinrichtung perforiert ausgebildet ist.

Wenn der Anode ein Brennstoff-Lösungsmittel-Gemisch zugeführt wird, dann tritt grundsätzlich das Problem auf, dass Brennstoff elektroosmotisch von der Anode zur Kathode übertreten kann. Dies wird auch als Brennstoff-Crossover oder Brennstoff-Drag bezeichnet. Aufgrund dieses Übertritts erfolgt eine für die Stromerzeugung nicht nutzbare direkte Oxidation des Brennstoffs an der Kathodenseite. Der Brennstoff-Drag führt zur Mischpotentialbildung, welche zu einer Absenkung des Ruhepotentials führt. Dadurch wird der Wirkungsgrad der Brennstoffzelle verschlechtert. Es kann zu einem erhöhten Brennstoffbedarf und Sauerstoffbedarf kommen.

Weiterhin besteht das grundsätzliche Problem, dass unerwünscht hohe Mengen an Wasser von Anodenseite zur Kathodenseite diffundieren können, was zu einer Flutung des Porensystems der Kathode führen kann und somit zu einer Leistungsminderung.

Erfindungsgemäß ist es vorgesehen, dass eine protonenleitende Zwischenlage in die Membraneinrichtung integriert ist. An der protonenleitenden Zwischenlage kann Brennstoff abreagieren. Der abreagierte Brennstoff kann dann nicht zur Kathodenseite gelangen.

Ferner lässt sich die Zwischenlage auf einfache Weise als Sperrschicht für die Wasserdiffusion ausbilden, indem diese hydrophob ausgebildet wird.

Die protonenleitende Zwischenlage lässt sich auf einfache Weise herstellen. Beispielsweise wird diese auf einer Membranlage durch Aufsprühen hergestellt.

Die Membraneinrichtung lässt sich auf einfache Weise herstellen, wenn diese mehrlagig aufgebaut ist mit einer ersten Membranlage, welche an die Kathode grenzt, einer zweiten Membranlage, welche an die Anode grenzt, und der mindestens einen protonenleitende Zwischenlage. Beispielsweise lässt sich die protonenleitende Zwischenlage auf der ersten Membranlage oder der zweiten Membranlage herstellen. Die andere Membranlage wird dann auf der hergestellten Zwischenlage angeordnet. Auf einer solchen Membraneinrichtung lassen sich wiederum die Kathode und die Anode herstellen.

Es ist eine einzige protonenleitende Zwischenlage zwischen der ersten Membranlage und der zweiten Membranlage vorgesehen. Die Membraneinrichtung lässt sich dadurch auf einfache Weise herstellen.

Die erste Membranlage weist eine kleinere Dicke auf als die zweite Membranlage. Dadurch lässt sich der Sauerstofftransport zu der protonenleitenden Zwischenlage gewährleisten, um eine katalytische Abreaktion von Brennstoff mit Sauerstoff zu ermöglichen.

Insbesondere erstreckt sich die protonenleitende Zwischenlage über die ganze Querschnittsfläche der Membraneinrichtung quer zur Verbindungsrichtung zwischen der Kathode und der Anode. Dadurch wird verhindert, dass Brennstoff und/oder Wasser einen Umgehungspfad für die Zwischenlage an der Membraneinrichtung haben, das heißt diese treffen zwangsläufig auf die Zwischenlage.

Günstig ist es, wenn die protonenleitende Zwischenlage als katalytische Schicht ausgebildet ist. Als Katalysatormaterial kann beispielsweise Platin oder Platin-Rhutenium eingesetzt werden. An einer solchen katalytischen Zwischenlage kann Brennstoff mit Sauerstoff katalytisch zu Wasser umgesetzt werden. Insbesondere ist an der mindestens einen Zwischenlage Brennstoff mit Sauerstoff zu Wasser abreagierbar.

Ferner ist es günstig, wenn die Zwischenlage hydrophob ausgebildet ist. Dadurch wirkt die Zwischenlage als Sperrschicht für den Wassertransport zur Kathodenseite.

Beispielsweise ist die Zwischenlage aus einem Katalysatormaterial und aus einem hydrophobierenden Material hergestellt. Als hydrophobierendes Material kann beispielsweise PTFE verwendet werden. Die entsprechende Zwischenlage wirkt sowohl als Katalysatorlage zur Abreaktion von Brennstoff zur Unterdrückung des Brennstoff-Drags als auch als Sperrschicht für den Wassertransport.

Die Membraneinrichtung lässt sich auf einfache Weise herstellen, wenn die protonenleitende Zwischenlage durch Aufsprühen hergestellt ist. Dadurch lässt sich auf einfache Weise eine protonenleitende Zwischenlage mit relativ geringer Dicke und definierten Eigenschaften herstellen.

Die Membraneinrichtung ist durchlässig (abgesehen von der sowieso vorhandenen Diffusion) für Oxidator zur protonenleitenden Zwischenlage ausgebildet. Dadurch wird der Oxidatortransport zur Zwischenlage gewährleistet, um wiederum die Abreaktion von Brennstoff zu ermöglichen.

Beispielsweise umfasst die Membraneinrichtung Öffnungen für den Oxidatortransport. Diese Öffnungen können durch Perforierung hergestellt sein.

Günstigerweise ist eine erste Membranlage, welche zwischen der Kathode und der Zwischenlage angeordnet ist, durchlässig für Oxidator ausgebildet.

Es hat sich als günstig erwiesen, wenn die Dicke der katalytischen Zwischenlage in der Größenordnung Mikrometer liegt. Eine typische Größenordnung ist beispielsweise 1 $\mu$m.

Bei dem Brennstoff handelt es sich insbesondere um Methanol oder Ethanol.

Die erfindungsgemäße Elektroden-Membran-Einheit lässt sich auch vorteilhafterweise in einer Brennstoffzelle und insbesondere in einer Brennstoffzelle vom Typ DMFC oder DEFC verwenden.

Die nachfolgende Beschreibung bevorzugter Ausführungsformen dient im Zusammenhang mit der Zeichnung der näheren Erläuterung der Erfindung.

Die einzige

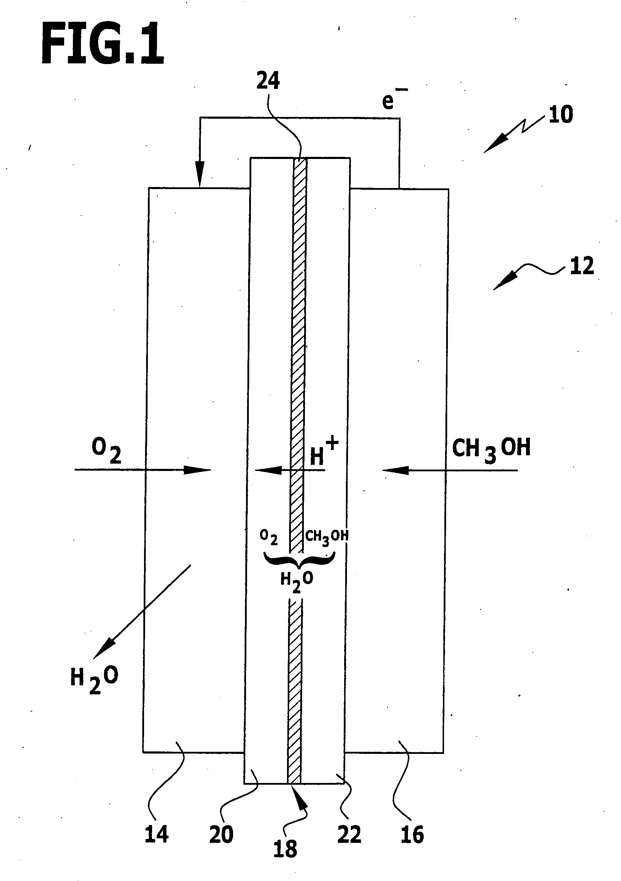

Figur 1     zeigt schematisch ein Ausführungsbeispiel einer erfindungsgemäßen Elektroden-Membran-Einheit.

Ein Ausführungsbeispiel einer erfindungsgemäßen Brennstoffzelle 10 umfasst eine Elektroden-Membran-Einheit 12. Diese weist eine Kathode 14 und eine Anode 16 auf. Zwischen der Kathode 14 und der Anode 16 ist eine Membraneinrichtung 18 angeordnet. Die Membraneinrichtung 18 ist protonenleitend.

Die Brennstoffzelle 10 wird mit einem flüssigen Brennstoff-Lösungsmittel-Gemisch betrieben. Das Lösungsmittel ist dabei insbesondere Wasser. Insbesondere handelt es sich bei der Brennstoffzelle 10 um eine Direkt-Methanol-Brennstoffzelle (DMFC) oder Direkt-Ethanol-Brennstoffzelle (DEFC) mit Methanol bzw. Ethanol als Brennstoff.

Die Kathode 14 wird mit Oxidator in der Form von reinem Sauerstoff oder von Luftsauerstoff beaufschlagt. Bei der Direkt-Methanol-Brennstoffzelle wird die Anode 16 mit Methanol beaufschlagt. An der Anode 16 laufen die Teilreaktionen

$$CH_3OH + H_2O \rightarrow CO_2 + 6H^+ + 6e^-$$

ab und an der Kathode 14 laufen die Teilreaktionen

$$\frac{3}{2} O_2 + 6H^+ + 6e^- \rightarrow 3H_2O$$

ab.

Die Membraneinrichtung 18 umfasst eine erste Membranlage 20, welche an die Kathode 14 grenzt. Insbesondere ist die Kathode 14 an der ersten Membranlage 20 angeordnet. Ferner umfasst die Membraneinrichtung 18 eine zweite Membranlage 22, welche an die Anode 16 grenzt. Insbesondere ist die Anode 16 auf der zweiten Membranlage 22 angeordnet.

Erfindungsgemäß ist zwischen der ersten Membranlage 20 und der zweiten Membranlage 22 eine protonenleitende Zwischenlage 24 angeordnet, welche zur Abreaktion von Brennstoff (wie beispielsweise Methanol) dient und welche als Sperrschicht für den Wasserfluss von der Anode zur Kathode wirkt.

Bei dem Betrieb der Brennstoffzelle 10 wird der Anode 16 das Brennstoff-Lösungsmittel-Gemisch zugeführt, wobei im Bezug auf den an der Anode 16 umgesetzten Brennstoff meist ein Überschuss an Brennstoff erforderlich ist. Es tritt dabei das grundsätzliche Problem auf, dass Brennstoff elektroosmotisch von der Anode 16 zur Kathode 14 übertreten kann. Dies wird auch als Brennstoff-Crossover oder Brennstoff-Drag bezeichnet. Aufgrund dieses Übertritts erfolgt eine für die Stromerzeugung nicht nutzbare direkte Oxidation des Brennstoffs an der Kathodenseite.

Es können unerwünscht hohe Mengen Wasser von der Anodenseite zur Kathodenseite diffundieren, was zu einer Flutung des Porensystems der Kathode 14 führen kann und somit zu einer Leistungsminderung.

Die protonenleitende Zwischenlage 24 wirkt dem entgegen. Sie weist katalytische und hydrophobe Eigenschaften auf. Sie ist dazu aus einem katalytischen Material und einem hydrophobierenden Material hergestellt. Beispielsweise ist sie aus einer Mischung eines Katalysatormaterials und eines hydrophobierenden Materials wie PTFE hergestellt. Bei dem Katalysatormaterial kann es sich beispielsweise um Platin oder Platin-Rhutenium handeln.

An der katalytischen Zwischenlage 24 kann Brennstoff und Sauerstoff katalytisch reagieren, wobei das Reaktionsprodukt Wasser ist. Es erfolgt also eine katalytische Abreaktion des Brennstoffs zu Wasser. Für den abreagierten Brennstoff hat man nicht mehr die Brennstoff-Drag-Problematik, das heißt der Übertritt von Brennstoff zu der Kathodenseite wird verhindert.

Durch die Hydrophobierung der Zwischenlage 24 wird Wasser (und auch Brennstoff), welches von der Anodenseite her stammt, zurückgehalten. Die eigentliche Brennstoffzellenreaktion wird dabei durch die Zwischenlage 24 aufgrund deren guten Protonenleitfähigkeit nicht behindert. Die Zwischenlage 24, welche zwischen der ersten Membranlage 20 und der zweiten Membranlage 22 eingebettet ist, ist aufgrund dieser Membranlagen 20, 22 nicht elektrisch leitend mit den Elektroden 14, 16 verbunden.

Die Zwischenlage 24 weist eine Dicke auf, welche beispielsweise in der Größenordnung von 1 $\mu$m liegt. Vor-

zugsweise weist sie eine im wesentlichen einheitliche Dicke auf, so dass die erste Membranlage 20 und die zweite Membranlage 22 parallel zueinander ausgerichtet sind.

Insbesondere erstreckt sich die protonenleitende Zwischenlage 24 über die gesamte Querschnittsfläche der Membraneinrichtung 18 (bezogen auf die Richtung quer zur Verbindungsrichtung zwischen der Kathode 14 und der Anode 16).

Es kann vorgesehen sein, dass die Dicke der ersten Membranlage 20 (welche an die Kathode 14 grenzt) kleiner ist als die Dicke der zweiten Membranlage 22. Dadurch wird der Oxidatortransport zu der Zwischenlage 24 verbessert.

Weiterhin kann es vorgesehen sein, dass die erste Membraneinrichtung 18 insbesondere an der ersten Membranlage 20 so ausgebildet ist, dass sie abgesehen von der sowieso vorhandenen Oxidatordiffusion durchlässig für Oxidator ist, so dass der Oxidatortransport zu der Zwischenlage 24 gewährleistet ist. Dies kann beispielsweise durch Öffnungen in der ersten Membranlage 20 realisiert sein. Solche Öffnungen sind beispielsweise durch Perforierungen hergestellt.

Die erste Membranlage 20 und die zweite Membranlage 22 sind aus üblichen Materialien wie beispielsweise Nafion hergestellt.

## Patentansprüche

1. Elektroden-Membran-Einheit für eine Brennstoffzelle (10), welche mit flüssigem Brennstoff-Lösungsmittel-Gemisch betrieben ist, umfassend eine Kathode (14), eine Anode (16) und eine protonenleitende Membraneinrichtung (18), welche zwischen der Anode (16) und der Kathode (14) angeordnet ist, wobei die Membraneinrichtung (18) mehrlagig aufgebaut ist mit einer ersten Membranlage (20), welche an die Kathode (14) grenzt, einer zweiten Membranlage (22), welche an die Anode (16) grenzt, und einer einzigen protonenleitenden Zwischenlage (24), welche zwischen der ersten Membranlage (20) und der zweiten Membranlage (22) angeordnet ist und jeweils an diese grenzt und an welcher Brennstoff abreagierbar ist und/oder welche als Sperrschicht für den Wasserfluss wirkt, und wobei die Membraneinrichtung (18) durchlässig für Oxidator zur protonenleitenden Zwischenlage (24) ausgebildet ist, **dadurch gekennzeichnet, dass** die erste Membranlage (20) eine kleinere Dicke aufweist als die zweite Membranlage (22) und dass die Membraneinrichtung (18) perforiert ausgebildet ist.

2. Elektroden-Membran-Einheit nach Anspruch 1, **dadurch gekennzeichnet, dass** die protonenleitende Zwischenlage (24) sich über die ganze Querschnittsfläche der Membraneinrichtung (18) quer zur Verbindungsrichtung zwischen der Kathode (14) und der Anode (16) erstreckt.

3. Elektroden-Membran-Einheit nach einem der vorangehenden Ansprüche, **dadurch gekennzeichnet, dass** die protonenleitende Zwischenlage (24) als katalytische Schicht ausgebildet ist.

4. Elektroden-Membran-Einheit nach einem der vorangehenden Ansprüche, **dadurch gekennzeichnet, dass** an der protonenleitenden Zwischenlage (24) Brennstoff mit Sauerstoff zu Wasser abreagierbar ist.

5. Elektroden-Membran-Einheit nach einem der vorangehenden Ansprüche, **dadurch gekennzeichnet, dass** die protonenleitende Zwischenlage (24) hydrophob ausgebildet ist.

6. Elektroden-Membran-Einheit nach einem der vorangehenden Ansprüche, **dadurch gekennzeichnet, dass** die protonenleitende Zwischenlage (24) aus einem Katalysatormaterial und aus einem hydrophobierenden Material hergestellt ist.

7. Elektroden-Membran-Einheit nach einem der vorangehenden Ansprüche, **dadurch gekennzeichnet, dass** die protonenleitende Zwischenlage (24) durch Aufsprühen hergestellt ist.

8. Elektroden-Membran-Einheit nach einem der vorangehenden Ansprüche, **dadurch gekennzeichnet, dass** die erste Membranlage (20), welche zwischen der Kathode (14) und der protonenleitenden Zwischenlage (24) angeordnet ist, durchlässig für Oxidator ausgebildet ist.

9. Elektroden-Membran-Einheit nach einem der vorangehenden Ansprüche, **dadurch gekennzeichnet, dass** die Dicke der protonenleitenden Zwischenlage (24) in der Größenordnung Mikrometer liegt.

10. Elektroden-Membran-Einheit nach einem der vorangehenden Ansprüche, **dadurch gekennzeichnet, dass** der Brennstoff Methanol oder Ethanol ist.

**11.** Verwendung einer Elektroden-Membran-Einheit gemäß einem der vorangehenden Ansprüche in einer Brennstoffzelle.

**12.** Brennstoffzelle, welche eine Elektroden-Membran-Einheit gemäß einem der Ansprüche 1 bis 10 umfasst.

**13.** Brennstoffzelle nach Anspruch 12, welche eine DMFC- oder DEFC-Brennstoffzelle ist.


**Claims**

**1.** Electrode-membrane unit for a fuel cell (10), which is operated with a fluid fuel-solvent mixture, comprising a cathode (14), an anode (16) and a proton-conducting membrane arrangement (18) that is disposed between the anode (16) and the cathode (14), wherein the membrane arrangement (18) is of a multi-layered construction comprising a first membrane layer (20) adjoining the cathode (14), a second membrane layer (22) adjoining the anode (16) and a single proton-conducting intermediate layer (24), which is disposed between and adjoins in each case the first membrane layer (20) and the second membrane layer (22) and at which fuel can fully react and/or which acts as a barrier layer for the water flow, and wherein the membrane arrangement (18) is designed to allow the passage of oxidant to the proton-conducting intermediate layer (24), **characterized in that** the first membrane layer (20) has a lower thickness than the second membrane layer (22) and that the membrane arrangement (18) is of a perforated construction.

**2.** Electrode-membrane unit according to claim 1, **characterized in that** the proton-conducting intermediate layer (24) extends over the entire cross-sectional area of the membrane arrangement (18) transversely to the direction of connection between the cathode (14) and the anode (16).

**3.** Electrode-membrane unit according to one of the preceding claims, **characterized in that** the proton-conducting intermediate layer (24) takes the form of a catalytic layer.

**4.** Electrode-membrane unit according to one of the preceding claims, **characterized in that** at the proton-conducting intermediate layer (24) fuel can fully react with oxygen to form water.

**5.** Electrode-membrane unit according to one of the preceding claims, **characterized in that** the proton-conducting intermediate layer (24) is designed so as to be hydrophobic.

**6.** Electrode-membrane unit according to one of the preceding claims, **characterized in that** the proton-conducting intermediate layer (24) is manufactured from a catalyst material and a hydrophobing material.

**7.** Electrode-membrane unit according to one of the preceding claims, **characterized in that** the proton-conducting intermediate layer (24) is manufactured by spraying on.

**8.** Electrode-membrane unit according to one of the preceding claims, **characterized in that** the first membrane layer (20), which is disposed between the cathode (14) and the anode (16), is designed to be permeable to oxidants.

**9.** Electrode-membrane unit according to one of the preceding claims, **characterized in that** the thickness of the proton-conducting intermediate layer (24) is in the order of magnitude of micrometres.

**10.** Electrode-membrane unit according to one of the preceding claims, **characterized in that** the fuel is methanol or ethanol.

**11.** Use of an electrode-membrane unit according to one of the preceding claims in a fuel cell.

**12.** Fuel cell, which comprises an electrode-membrane unit according to one of claims 1 to 10.

**13.** Fuel cell according to claim 12, which is a fuel cell of the DMFC or DEFC type.

**Revendications**

1. Unité membrane-électrode pour une pile à combustible (10) fonctionnant avec un mélange liquide combustible-solvant, comprenant une cathode (14), une anode (16) et un dispositif de membrane (18) conducteur de protons disposé entre l'anode (16) et la cathode (14), où le dispositif de membrane (18) présente une structure à plusieurs couches avec une première couche de membrane (20) adjacente à la cathode (14), une deuxième couche de membrane (22) adjacente à l'anode et une seule couche intercalaire conductrice de protons (24) disposée entre la première couche de membrane (20) et la deuxième couche de membrane (22) auxquelles elle est adjacente, et sur laquelle réagit le combustible et/ou qui agit comme couche de barrière pour le flux d'eau, et où le dispositif de membrane (18) est réalisé de manière à être perméable à un oxydant pour la couche intercalaire conductrice de protons (24), **caractérisée en ce que** la première couche de membrane (20) présente une épaisseur inférieure à la deuxième couche de membrane (22), et **en ce que** le dispositif de membrane (18) est perforé.

2. Unité membrane-électrode selon la revendication 1, **caractérisée en ce que** la couche intercalaire conductrice de protons (24) s'étend sur toute la surface de section du dispositif de membrane (18), perpendiculairement au sens de jonction entre la cathode (14) et l'anode (16).

3. Unité membrane-électrode selon l'une des revendications précédentes, **caractérisée en ce que** la couche intercalaire conductrice de protons (24) est réalisée comme couche catalytique.

4. Unité membrane-électrode selon l'une des revendications précédentes, **caractérisée en ce que** sur la couche intercalaire conductrice de protons (24), le combustible réagit à l'eau avec de l'oxygène.

5. Unité membrane-électrode selon l'une des revendications précédentes, **caractérisée en ce que** la couche intercalaire conductrice de protons (24) est hydrophobe.

6. Unité membrane-électrode selon l'une des revendications précédentes, **caractérisée en ce que** la couche intercalaire conductrice de protons (24) est fabriquée dans un matériau catalyseur et dans un matériau hydrophobant.

7. Unité membrane-électrode selon l'une des revendications précédentes, **caractérisée en ce que** la couche intercalaire conductrice de protons (24) est produite par pulvérisation.

8. Unité membrane-électrode selon l'une des revendications précédentes, **caractérisée en ce que** la première couche de membrane (20) disposée entre la cathode (14) et la couche intercalaire conductrice de protons (24) est perméable à un oxydant.

9. Unité membrane-électrode selon l'une des revendications précédentes, **caractérisée en ce que** l'épaisseur de la couche intercalaire conductrice de protons (24) est de l'ordre de grandeur des micromètres.

10. Unité membrane-électrode selon l'une des revendications précédentes, **caractérisée en ce que** le combustible est du méthanol ou de l'éthanol.

11. Utilisation d'une unité membrane-électrode selon l'une des revendications précédentes dans une pile à combustible.

12. Pile à combustible, comprenant une unité membrane-électrode selon l'une des revendications 1 à 10.

13. Pile à combustible selon la revendication 12, laquelle est une pile à combustible DFMC ou DEFC.

# FIG.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19646487 C2
- DE 19917812 C2
- EP 1263066 A2
- US 20020058172 A1
- DE 19859765 A1
- DE 19803132 C1
- JP 10040936 A
- US 20040197626 A1

**In der Beschreibung aufgeführte Nicht-Patentliteratur**

- **PU C et al.** A METHANOL IMPERMEABLE PROTON CONDUCTING COMPOSITE ELECTROLYTE SYSTEM. *JOURNAL OF THE ELECTROCHEMICAL SOCIETY,* 07. Juli 1995, vol. 142 (7), L 119-L120